# EUROPEAN PATENT APPLICATION

(11) **EP 0 691 151 A2**
(43) Date of publication of application: **10.01.1996**
(21) Application number: 95110487.6
(22) Date of filing: 05.07.1995
(51) Int. Cl.: B01D 37/00, B01D 36/02

(54) **Filtration device for waste liquids**

(30) Priority: 06.07.1994 IT VR940040 U
(71) Applicant: ME-COM S.r.l., I-37048 S. Pietro di Legnago (VR) (IT)
(72) Inventor: Resch, Alfred, I-37138 Verona (IT)

(57) **Abstract**

The filtration device (10) according to the invention comprises a series of filtration cartridges (16-21) which are advantageously housed inside of a suitable container and which have different characteristics in accordance with both the type and the dimension of the element which are normally present in the waste liquids of either an odontotechnical or an odontological dentist's surgery, as well as a membrane self-priming pump suitable for being activated in an either automatic or semi-automatic way starting from an either manual or pedal command. According to the invention, said device (10) is placed downstream of the discharge hole (13) through which the liquid is evacuated, and of a possible decantation tank in which a suitable additive enhances precipitation of heavy particles. According to an advantageous feature of the invention, a membrane self-priming pump (15) is activated either in an automatic or in a semi-automatic way when the discharge hole is opened.

## Description

### TECHNICAL FIELD

The present invention relates to a filtration device fo waste liquids.

More particularly, the present invention relates to a device which is particularly suitable for carrying out a filtration process of waste liquids coming from an odontotechnical or odontological use.

The invention may be mainly applied by odontotechnical or dentist's surgeries, but it may also be used for filtrating other kinds of polluting waste liquids.

### BACKGROUND ART

The evacuation of liquids coming from dental surgery operations constitutes a major problem of both odontotechnical and odontological dentist's surgeries.

According to different cases, waste liquids are mainly constituted by water containing a solution or a suspension of metallic or ceramic particles, chemical products of varius kinds, blood, viruses, bacteria.

These liquids are normally evacuated either directly into the sewer system or into a mere decantation tank which is, on its turn, occasionally discharged, thereby causing high environmental pollution risks.

### DESCRIPTION OF THE INVENTION

The present invention aims to provide for a simple and cheap solution to the problem cited above, and to provide, thus, for a filtration device for waste liquids which is effective, low-cost and easy to be installed.

This is achieved by a filtration device having the features disclosed in the main claim.

The dependent claims outline some particularly advantageous forms of embodiment of the invention.

The filtration device according to the invention comprises a series of filtration cartridges which are advantageously housed inside of a suitable container and which have different characteristics in accordance with both the type and the dimension of the element which are normally present in the waste liquids of either an odontotechnical or an odontological dentist's surgery, as well as a membrane self-priming pump suitable for being activated in an either automatic or semi-automatic way starting from an either manual or pedal command.

According to the invention, said device is placed downstream of the discharge hole through which the liquid is evacuated, and of a possible decantation tank.

According to an advantageous feature of the invention, the membrane self-priming pump is activated either in an automatic or in a semi-automatic way when the discharge hole is opened.

### ILLUSTRATION OF DRAWINGS

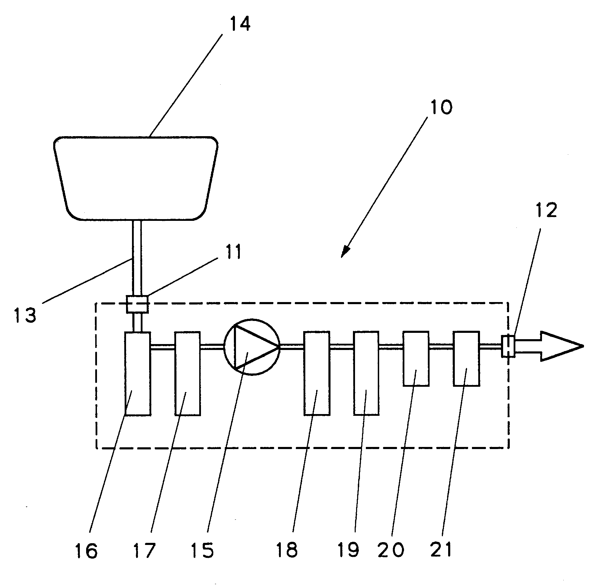

Other features and advantages of the invention will become apparent by reading the following description, given as a non-limitng example, with the help of the figure illustrated in the attached drawing, which shows a form of embodiment of the filtration device according to the invention.

### DESCRIPTION OF A FORM OF EMBODIMENT

In the figure, reference sign 10 generally indicates a filtration device according to the present invention.

Device 10, which is normally housed inside of a suitable container, is provided with a first inlet connector 11 for the liquid to be filtered and a second outlet connector 12 for the filtered liquid.

Connector 11 is connected, by means of a pipe 13, to the discharge hole of a small tank 14 which may be constituted, for instance, either by the lavatory placed close to the treatment chair of a dentist's surgery, or by the basin for discharging the products of an odontotechnical firm.

As previously described, according to different cases, in the small tank 14 is normally poured some water including either a solution or a suspension, or both, of either metallic or ceramic particles, chemical products of various kinds, viruses, bacteria.

According to the invention, device 10 comprises a plurality of filtration cartridges serially connected to each other, each one of said cartridges being suitable for separating products of different kind and dimension, as well as a pump 15 suitable for allowing a filtration process to be carried out, which couldn't be carried out by means of the only drop pressure.

According to the particular form of embodiment illustrated in the figure, the device has a first filtration cartridge 16, e.g. a wound-yarn cartridge having a filtration capacity of 100 micron, and another wound-yarn filtration cartridge 17 having a filtration capacity of 50 micron.

Cartridges 16, 17 are suitable for carrying out a mechanical separation of the products, e.g. metallic particles or chalk powder etc., which precipitate on the bottom of respective cartridges 16, 17.

To this aim a cartridge is used of the (normally marketed) kind which contains a pair of filtration units, one of these units being previously removed from the cartridge.

The filtration process is then carried out by a single filtration unit, while the remaining part of the cartridge is used for decantation of solid particles.

The liquid flowing out of cartridge 17 is sucked by a pump 15, preferably a membrane self-priming pump which, according to a particularly advantageous form of embodiment of the invention, is automatically switched on by means of a suitable electric and/or electronic circuit once the products are evacuated from small tank 14.

Alternately, said pump may be switched on in a semi-automatic way, e.g. by means of a manual or pedal command.

Downstream of pump 15 there is a further pair of filtration cartridges 18, 19, having respective filtration capacities of 10 and 2 micron.

The filtration unit of said cartridges is preferably constituted by a ceramic material suitable for holding possible viruses and bacteria which may be present in the waste liquid.

The device represented in the figure is completed by a pair of active-coal filtration cartridges 20, 21, which are suitable for eliminating residual chemical products and bad smells.

Outlet connector 12 is the connected to a pipe (not illustrated) which leads the filtered liquid either to the sewage system or to a decantation tank.

The invention has been previously described referring to a particular form of embodiment of the same, where some pairs of wound-yarn, ceramic and active-coal cartridges are present.

However, the invention is neither limited to the number of cartridges, as previously described, nor to the kind of the same (in other instances other kinds of cartridges may be used as, for instance, either cationic resin cartridges, or mixed-bed cationic and anionic resin cartridges, or crystalline polyphosphate cartridges, or syntetic fibre cartridges, or quartzite cartridges, or bentonitic clay cartridges, or stainless steel tubular mesh cartridges), nor to the filtration capacity of the single cartridges.

In fact the invention comprises a plurality of forms of embodiments, which may be used according to the application of the device (by way of example, different configurations are required in the case where the device is to be installed in a dentist's surgery rather than in an odontotechnical firm), to the required rate of flow, as well as according to the higher or lower filtration capacity required by various applications.

All these variants obviously fall within the terms of the invention.

As a way of example, the invention comprises a further advantageous form of embodiment according to which a first mechanical filtration is carried out by means of a pre-filtration unit, which is preferably made of cotton and a polyamidic fibre, said unit being installed between the discharge hole of the lavatory and a decantation tank placed beneath said lavatory; this pre-filtration unit holds all those rough-dimensioned substances which could clog the following filtration units.

According to the invention, a special additive is added into the tank in order to convert the soluble polluting substances into crystalline precipitates or colloidal particles.

Said additive is generally constituted by a mixture of powder vegetable coal, a flocculating agent, sodium anhydrous carbonate and sodium anhydrous bicarbonate.

According to a particularly advantageous form of embodiment, said additive is constituted, for a quantity equal to one litre of mixture, by 20 g powder vegetable coal, 0,25 g flocculating agent, 16,5 g sodium anhydrous carbonate, 84,25 g sodium anhydrous bicarbonate and 879 g water.

The addition of an additive of this kind causes on the waste liquid some advantageous effects for the subsequent filtration.

Among these effects it should be remembered that it allows the pH of the waste liquid to be mantained under a predetermined limit; furthermore, the additive causes soluble solid metals to be turned into insoluble hydroxydes which are suitable for precipitating.

Still, the presence of the flocculating agent enhances the link between the heavy particles; therefore, the precipitation process is improved.

Thanks to the presence of such additive, most heavy particles precipitate and they settle in the decantation tank; on the other hand, the product flowing beyond the tank is deposited on the filters, while the sufficiently depurated waste liquid flows through said filters.

At this aim, a first mechanical filtration unit, e.g. a 100 micron filter, is placed downstream of the tank; the outlet of this filtration unit is serially connected to the pump which feeds the subsequent filtration units.

The additive is periodically added to the tank, according to the use requirements and to the quantities of waste liquid to be treated.

## Claims

1. Filtration device (10) for waste liquids, advantageously device suitable for carrying out a filtration process of waste liquids in the medical-odontological field, characterised in that it comprises a series of filtration cartridges (16-21) of different type and of different filtration capacity from each other, and a pump (15), said cartridges and said pump being serially connected to the liquid drain pipe.

2. Device (10) according to claim 1, characterised in that it further comprises a decantation tank placed upstream of said filtration cartridges, said decantation tank being fed with an additive suitable for turning the soluble polluting substances into crystalline precipitates or colloidal particles.

3. Device according to claim 2, characterised in that said additive is constituted by a mixture of powder vegetable coal, a flocculating agent, sodium anhydrous carbonate and sodium anhydrous bicarbonate.

4. Device according to claim 3, characterised in that each liter of additive contains about 20 g powder vegetable coal, about 0,25 g flocculating agent, about 16,5 g sodium anhydrous carbonate, about 84,25 g sodium anhydrous bicarbonate and about 879 g water.

5. Device (10) according to claim 2, characterised in that it further comprises a pre-filtration unit, advantageously made of cotton and polyamidic fibre, which is placed between the drain pipe and said decantation tank.

6. Device according to anyone of the preceding claims, characterised in that said cartridges (16-21) and said pump (15) are housed inside of a container provided with waste liquid inlet and outlet (11, 12) connectors.

7. Device (10) according to anyone of the preceding claims, characterised in that said pump (15) is a membrane self-priming pump.

8. Device (10) according to anyone of the preceding claims, characterised in that said pump (15) is electrically connected to a device for activating the drin pipe in order to switch said pump on only when the liquid is evacuated towards said device (10).

9. Device (10) according to anyone of the preceding claims, characterised in that said cartridges (16) comprise wound-yarn filtration units and/or cationic resin filtration units, and/or mixed-bed cationic and anionic filtration units, and/or crystalline polyphosphate filtration units, and/or syntetic fibre filtration units, and/or quartzite filtration units, and/or bentonitic clay filtration units, and/or stainless steel tubular mesh filtration units.

10. Device (10) according to anyone of the preceding claims, characterised in that the container of at least one of said cartridges is only partially filled with the filtration unit, a free portion of the container acting as decantation tank for heavy particles.
